# EUROPEAN PATENT SPECIFICATION

(11) **EP 2 002 926 B1**
(45) Date of publication and mention of the grant of the patent: **20.10.2010**
(21) Application number: 08158269.4
(22) Date of filing: 13.06.2008
(51) Int. Cl.: B23Q 3/06, B25B 5/14, F01D 5/00

(54) **Turbine blade blocking device and method**
Turbinenblatthaltevorrichtung und -verfahren
Dispositif et procédé pour fixe de maintien d'une aube de turbine

(30) Priority: 15.06.2007 IT MI20071206
(43) Date of publication of application: 17.12.2008
(73) Proprietor: ANSALDO ENERGIA S.P.A., 16152 Genova (IT)
(72) Inventor: Grasso, Luciano, 16164 Genova (IT)
(74) Representative: Jorio, Paolo

(56) References cited:
- EP-A- 0 234 677
- DE-A1-102004 056 142
- US-A1- 2007 006 475

## Description

The present invention relates to a turbine blade blocking device and method.

Specifically, the present invention relates to a blocking device for a turbine blade adapted to maintain the blade fixed during machining the blade itself, specifically during chip-forming machining.

As known, a turbine blade extends along a longitudinal axis and includes a main body, generally characterized by a more or less high torsion about the longitudinal axis, an anchoring base and a tip opposite to the anchoring base.

The known turbine blade blocking devices of the above-described type include at least one vice, which blocks the main body of the blade. A blocking device is known and described in US 4829720, which includes a vice appropriately shaped to allow to accommodate the main body of the blade between the jaws of the vice, and thus to fasten the blade.

Such a type of blocking devices are disclosed. Also in EP-A-0234677, US 2007/006475 and DE 10 2004 056 142.

This type of device, however, may not be adapted to different turbine blade models. The shape of the vice is indeed made ad hoc and is only compatible with one type of blade. Furthermore, it must be considered that not all the blades of a same model are identical. The use of the device of the aforesaid type for a blade, for example of size slightly different from the design size, implies a non-negligible fastening instability. As a consequence, indeed, when machining the tip and the anchoring base of the blade, the fastening instability gives rise to vibrations which in most cases cause machining imperfections. The presence of such machining imperfections on the tip and on the base of the blade causes the rejection of the piece, with evident disadvantages from the economic point of view.

It is an object of the present invention to make a turbine blade blocking device which is free from the drawbacks of the known art noted herein; specifically, it is an object of the invention to make a turbine blade blocking device capable of ensuring an appropriate fastening stability for different blade models.

This object can be achieved by a device according to claim 1 and a method according to claim 13.

Further features and advantages of the present invention will be apparent from the following description of a non-limitative embodiment thereof, with reference to the figures in the accompanying drawings, in which:
- figure 1 is a top perspective view of a blocking device of a turbine blade made according to the present invention;
- figure 2 shows two plan views of two details of a turbine blade;
- figure 3 is a perspective frontal view of the blocking device in figure 1;
- figure 4 is a detail of the blocking device in figure 1.

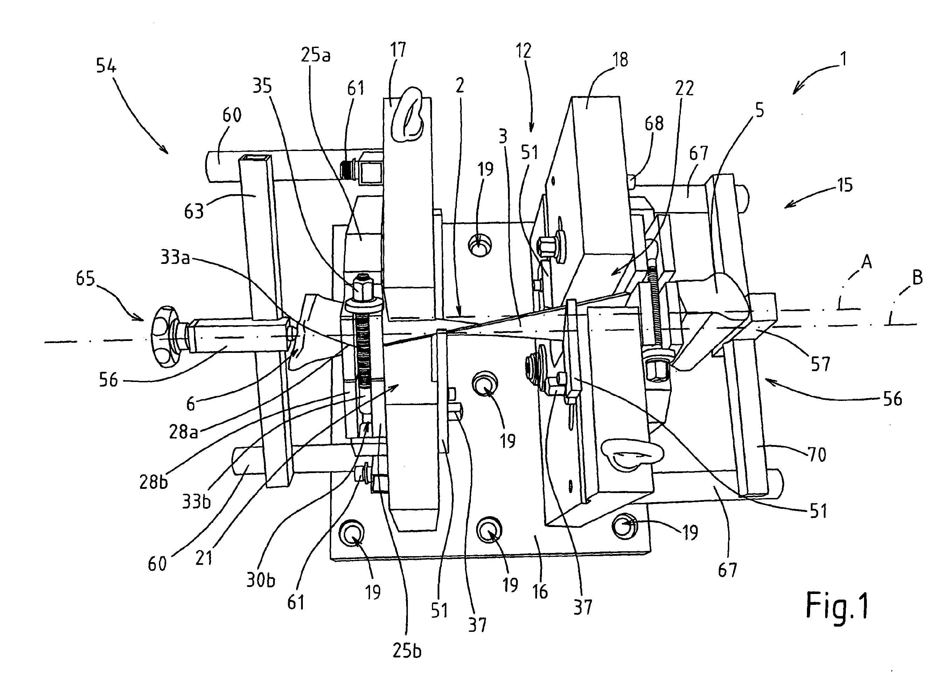

In figure 1, number 1 indicates as a whole a blocking device of a turbine blade 2 (not shown in the accompanying drawings).

The blade 2 extends along a longitudinal axis A and is provided with a main body 3, characterized by a given torsion about the longitudinal axis A, of an anchoring base 5 and of a tip 6 opposite to the anchoring base 5.

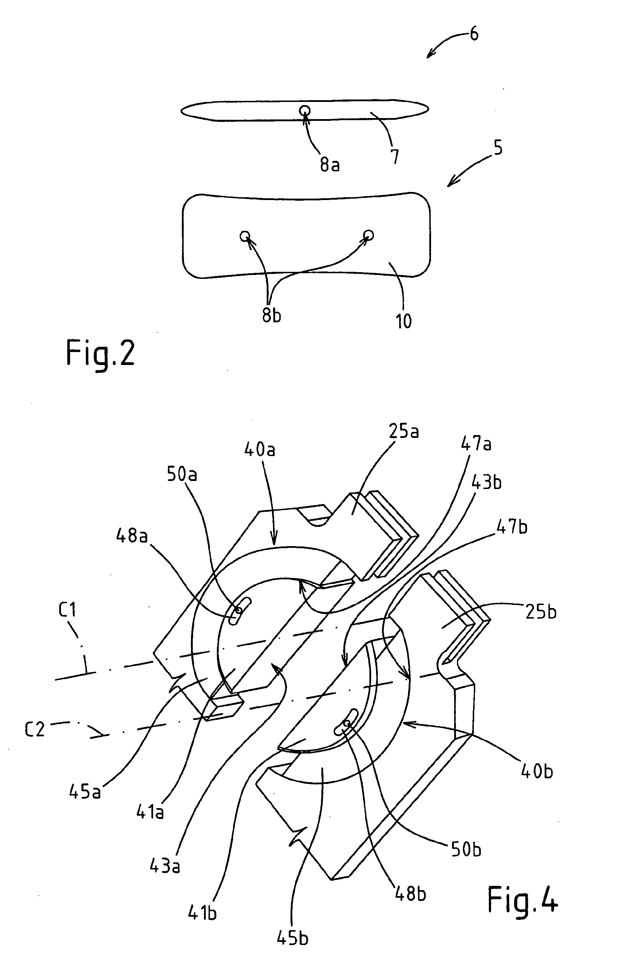

With reference to figure 2, the tip 6 has a bottom face 7 and is provided with a hole 8a arranged essentially in the middle of the bottom face 7 of the tip 6. The anchoring base 5 of the blade 2 has a bottom face 10 and is provided with two holes 8b, which are arranged at a reciprocally predetermined distance essentially in a central area of the bottom face 10.

The holes 8a and 8b are commonly named 'reference marks' and are normally used as reference points for assembling the blade 2 to the turbine for ensuring the correct positioning of the blade 2.

With reference to figure 1, the device 1 essentially extends along a longitudinal axis B and includes a frame 12, two vices 13 and 14 and a centering device 15.

The frame 12 includes a fastening plate 16 and two walls 17 and 18, which extend from the fastening plate 16 essentially in a direction transversal to the fastening plate 16 itself. Specifically, the fastening plate 16 has an essentially rectangular shape and presents a plurality of holes 19 for fixing a working plate, e.g. by means of screws (not shown for simplicity).

The walls 17 and 18 preferably extend from the fastening plate 16 in an orthogonal direction and are symmetrically arranged. Specifically, the wall 17 has an opening 21 adapted to accommodate a first portion of the main body 3 of the blade 2 and the wall 18 has an opening 22 adapted to accommodate a second portion of the main body 3 of the blade 2. Preferably, the openings 21 and 22 have different size and shape in order to appropriately accommodate the corresponding portion of the main body 3 of the blade 2. In the example in the accompanying drawings, the opening 22 is larger in size than the opening 21, although of course the opposite may be applied.

The vices 13 and 14 are essentially identical and are supported, preferably in a rotational manner, by the walls 17 and 18, respectively, of the frame 12. Specifically, the vices 13 and 14 are specular and operative in proximity of the opening 21 of the wall 17 and of the opening 22 of the wall 18, respectively.

One only vice 13 will be described below, the vice 14 being essentially identical to the vice 13.

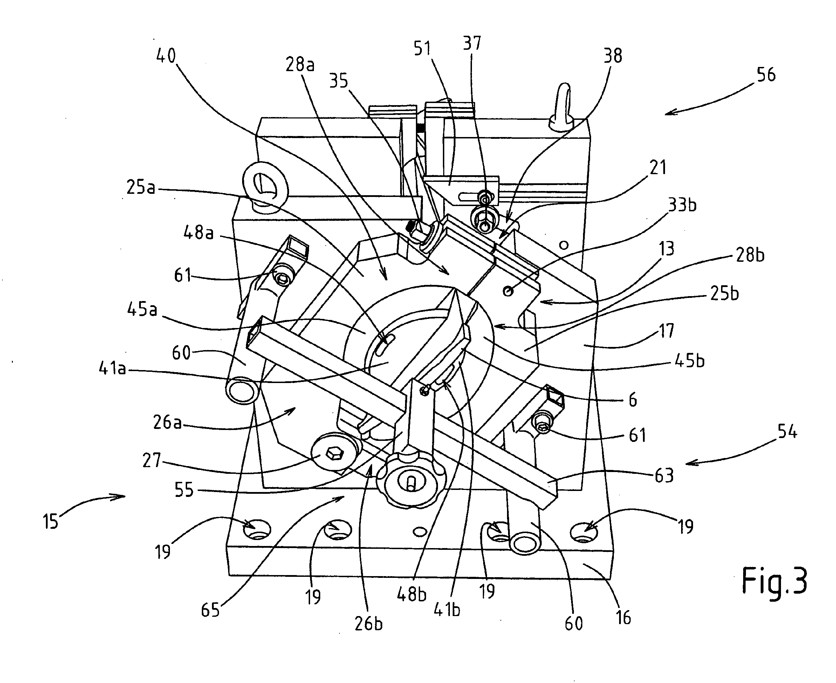

With reference to figure 3, the vice 13 includes two jaws 25a and 25b, which are hinged to a first end 26a and 26b by means of a hinge 27, which is fixed to the wall 17 of the frame 12.

The jaws 25a and 25b are selectively connectable to a second end 28a and 28b, opposite to the first end 26a and 26b. Specifically, as better shown in figure 1, the second ends 28a and 28b respectively have a groove 30a and 30b; the groove 30a is adapted to accommodate a threaded pin 33a fixed to a second pin 33b, which is essentially arranged orthogonal to the pin 33a and is accommodated in a hole of the jaw 25b. This type of connection between the threaded pin 33a and the pin 33b allows to rotate the pin 33a between an operating fastening position (figure 3) and a rest position. The second ends 27a and 27b are fastened by means of a nut 35 screwed onto the threaded pin 33a.

At least one of the jaws 25a and 25b is rotationally supported by the wall 17, e.g. by means of screws or bolts 37 screwed into slots 38 of the supporting wall 17 (the slots 38 of the wall 18 and the bolts 37 of the vice 14 are best seen in figure 3).

With reference to figure 3, each jaw 25a 25b includes a supporting body 40a, 40b and a semicircular plate 41a 41b, which is movably supported with respect to the supporting body 40a, 40b and is adapted to be clamped against the main body 3 of the blade 2. Specifically, each semicircular plate 41a 41b has a gripping face 43a, 43b adapted to be arranged in abutment against the main body 3 of the blade 2.

With reference to figure 4, each supporting body 40a, 40b comprises a pocket 45a, 45b, which is fixed to the corresponding jaw 25a and 25b, preferably by spot welding, in an essentially intermediate position of the jaw 25a or 25b.

Each pocket 45a, 45b defines a semicircular seat 47a and 47b adapted to accommodate a corresponding semicircular plate 41a, 41b.

With reference to figure 4, each semicircular plate 41a, 41b extends about an axis C1, C2 and is rotationally supported about the axis C1, C2. Specifically, each semicircular plate 41a, 41b rotationally engages the corresponding semicircular seat 47a and 47b and is surrounded by the corresponding pocket 45a and 45b.

Each semicircular plate 41a, 41b is provided with an essentially semicircular-shaped slot 48a and 48b, which is adapted to be engaged by a pin 50a and 50b adapted to maintain the semicircular plate 41a, 41b in the semi circular seat 47a and 47b.

With reference to figures 1 and 3, the device 1 further includes stop elements 51, coupled to the walls 17 and 18 and arranged on the opposite sides of the walls 17 and 18 with respect to the vices 13 and 14. Specifically, there are four stop elements 51, two for each wall 17 and 18, and are adapted to be arranged in abutment against the main body 3 of the blade 2 to ensure a better fastening stability, thus preventing the blade 2 from moving.

Specifically, the stop elements 51 are arranged close to the openings 21 and 22 of the walls 17 and 18, are movable and features a wedge-shaped end, which defines a surface adapted to be arranged in abutment against the main body of the blade 2.

With reference to figure 1, the centering device 15 is adapted to arrange the blade 2 in a desired position. Preferably, the blade 2 is arranged so that the axis A is arranged essentially parallel to the axis B of the device 1 to facilitate the machining of the anchoring base 5 and of the tip 6.

The centering device 15 includes a first fastening body 54, which includes a pointed element 55 adapted to be arranged in abutment against the reference mark 8a of the tip 6 of the blade 2, and a second fastening body 56, which includes a two-pointed element 57 adapted to be arranged in abutment against the reference marks 8b of the anchoring base 5 of the blade 2.

Specifically, the fastening body 54 includes two brackets 60, selectively fixable to the wall 17 by means of bolts 61, and a rod 63, connected to the brackets 60 and essentially arranged orthogonal to both brackets 60, which supports the pointed element 55. The position of the point of the pointed element 55 is adjustable. Specifically, the adjustment of the position of the point must allow the point to move in the direction essentially parallel to the axis B of the device, so as to assure an appropriate abutment of the point against the reference mark 8a of the blade 2. In the example in the accompanying drawings, the one-pointed element 55 may be adjusted by means of a screw feeding device 65.

The fastening body 56 includes two brackets 67, selectively fixable to the wall 18 by means of bolts 68, and a rod 70, connected to the brackets 67 and essentially arranged orthogonal to both brackets 67, which supports the two-pointed element 57.

In the non-limiting example in the accompanying drawings, the two-pointed element 57 is not adjustable.

Obviously, the centering device 15 may include a single pointed element adjustable parallel to the axis B of the device 1, chosen between the one-pointed element 55 and the two-pointed element 58, or may include two pointed elements characterized by an adjustable position of the point, or points, parallel to the axis B of the device 1.

As described more in detail below, the centering device 15 must be disassembled before machining the blade 2.

The blocking method of the blade 2 essentially provides for blocking the blade 2 by means of the above-described blocking device 1.

Specifically, the method includes the steps of:
accommodating the blade 2 in two openings 21 and 22 of a frame 12 of the device 1;
positioning the blade 2 in a certain position by means of a centering device 15, e.g. with the axis A of the blade 2 parallel to the axis B of the blocking device 1;
blocking the blade 2, preferably the main body 3 of the blade 2, by means of two vices 13 and 14; and
arranging stop elements 51 in abutment against the main body 3 of the blade 2 for blocking the blade 2.

Specifically, the step of accommodating the blade 2 in two openings 21 and 22 of a frame 12 of the device 1 includes the step of accommodating two portions of the main body 3 of the blade 2 in the two openings 21 and 22 of the frame 12.

The step of positioning the blade 2 in a certain position by means of the centering device 15 includes arranging a first and a second fastening bodies 54 and 56 respectively in abutment against the tip 6 of the blade 2 and the anchoring base 5 of the blade 2. Specifically, the step of arranging the first and the second fastening bodies 54 and 56 includes arranging a pointed element 55 in abutment against the reference mark 8a of the tip 6 and arranging a two-pointed element 57 in abutment against the reference marks 8b of the anchoring base 5 of the blade 2.

The step of blocking the main body 3 of the blade 2 by means of two vices 13 and 14 includes clamping two jaws 25a 25b of a vice 13 about the blade 2 so that the corresponding gripping faces 43a, 43b of the jaws 25a, 25b are arranged in contact with the main body 3 of the blade 2, and clamping two jaws 25a, 25b of a vice 14 about the blade 2 so that corresponding gripping faces 43a, 43b of the jaws 25a, 25b are arranged in contact with the main body 3 of the blade 2.

Specifically, the step of clamping the jaws 25a, 25b of the vices 13 and 14 includes the step of clamping two semicircular plates 41a and 41b of the vices 13 and 14 about the main body 3 of the blade 2, which are provided with gripping faces 43a, 43b and rotate with respect to corresponding supporting bodies 40a, 40b. The step of clamping two semicircular plates 41a and 41b includes the step of adjusting the position of each semicircular plate 41a and 41b, by rotating each semicircular plate 41a and 41b about its axis C1, C2, so that the gripping face 43a, 43b of each semicircular plate 41a and 41b is essentially arranged in abutment against the main body 3 of the blade 2.

The step of clamping the jaws 25a 25b of the vices 13 and 14 further includes the step of adjusting the position of the vices 13 and 14 with respect to the frame 12.

The device according to the present invention presents the following advantages.

Firstly, the device 1 is adaptable to a wide range of turbine blades 2 because the position and inclination of the vices 13 and 14 are adjustable, the position of the centering device 15 is adjustable, and the semicircular plates 41a, 41b of each vice 13, 14 rotate about their axis to allow a good coupling between the gripping faces 43a and 43b of the semicircular plates 41a, 41b and the main body 3 of the blade 2. Specifically, the device 1 may be adapted to a range of blades 2 having axial length restricted to a certain range. In all cases, parts of the device 1 may be rapidly and easily replaced, e.g. the centering device 15 or the semicircular plates 41a, 41b of the vices 13 and 14, so as to make the device 1 adaptable to a different range of blades 2.

Secondly, the fastening stability of the blade 2 by means of the device 1 is very high because the presence of the semicircular plates 41a, 41b and of the stop elements 51 prevents the blade 2 from vibrating during machining, e.g. by chip-forming. The absence of vibrations implies a greater machining accuracy and therefore a decrease of rejected pieces with evident advantages from the economic point of view.

Thirdly, the centering device 15 assures that the blade 2 is fixed in a given position, and preferably so that the axis A of the blade 2 is essentially arranged parallel to the axis B of the device 1. In such a manner, the machining of the tip 6 and of the anchoring base 5 of the blade 2 is easier and above all more accurate, with evident advantages from a technical and economic point of view.

Finally, the device according to the present invention is simple to be used and easy and cost-effective to be made.

It is finally apparent that changes and variations may be made to the device and method described herein without departing from the scope of the appended claims.

## Claims

1. A blocking device of a turbine blade (2); the blade (2) extending along a first longitudinal axis (A) and including a main body (3), an anchoring base (5) and a tip (6) opposite to the anchoring base (5); the device (1) extending along a second longitudinal axis (B) and including a frame (12); at least one first vice (13), which includes two jaws (25a, 25b), adapted to be clamped about the main body (3) of the blade (2), each of which is provided with a gripping face (43a, 43b) and includes a supporting body (40a, 40b) and a semicircular plate (41a, 41b); the semicircular plate (41a, 41b) being provided with the gripping face (43a, 43b) and being movably supported with respect to the supporting body (40a, 40b) to assure the maximum contact of the gripping face (43a, 43b) with the blade (2);
the device (1) being **characterized in that** it includes:
- a second vice (14), which includes two jaws (25a, 25b), adapted to be clamped about the main body (3) of the blade (2), each of which is provided with a gripping face (43a, 43b); each jaw (25a, 25b) including a supporting body (40a, 40b) and a semicircular plate (41a, 41b); the semicircular plate (41a, 41b) being provided with the gripping face (43a, 43b) and being movably supported with respect to the supporting body (40a, 40b) to assure the maximum contact of the gripping face (43a, 43b) with the blade (2) ; and
- a centering device (15) supported by the frame (12); the centering device (15) including a first fastening body (54) adapted to be arranged in abutment against the tip (6) of the blade (2) and a second fastening body (56), adapted to be arranged in abutment against the anchoring base (5) of the blade (2).

2. A device according to claim 1, wherein each semicircular plate (41a, 41b) extends about a corresponding axis (C1; C2) and is rotationally supported about said axis (C1; C2) with respect to the supporting body.

3. A device according to any one of the preceding claims, wherein at least one jaw (25a, 25b) of the first vice (13) is rotationally supported with respect to the frame (12).

4. A device according to any one of the preceding claims, wherein at least one jaw (25a, 25b) of the second vice (14) is rotationally supported with respect to the frame (12).

5. A device according to any one of the preceding claims, wherein the frame (12) includes a fastening plate (16).

6. A device according to claim 5, wherein the frame (12) includes at least a first wall (17), which extends from the fastening plate (16) essentially transversal to the fastening plate (16) and to which the first vice (13) is coupled.

7. A device according to claim 5 or 6, wherein the frame (12) includes at least a second wall (18), which extends from the fastening plate (16) essentially transversal to the fastening plate (16) and to which the second vice (14) is coupled.

8. A device according to any one of the preceding claims, **characterized in that** the centering device (15) is fixed to the first wall (17).

9. A device according to any one of the claims from 1 to 7, wherein the centering device (15) is fixed to the first and to the second walls (17, 18).

10. A device according to any one of the preceding claims, wherein the position of the first fastening body (54) is adjustable in a direction parallel to the second longitudinal axis (B).

11. A device according to any one of the preceding claims, wherein the position of the second fastening body (56) is adjustable in a direction parallel to the second longitudinal axis (B).

12. A device according to any one of the preceding claims, **characterized in that** it includes stop elements (51), adapted to be arranged in abutment against the main body (3) of the blade (2) for blocking the blade (2) .

13. A method for blocking a turbine blade (2); the blade (2) extending along a longitudinal axis (A) and including a main body (3), an anchoring base (5) and a tip (6) opposite to the anchoring base (5); the method including the step of clamping two jaws (25a, 25b) of a first vice (13) about the blade (2) so that the corresponding gripping faces (43a, 43b) of the jaws (25a, 25b) are arranged in contact with the blade (2); the method being **characterized in that** the step of clamping the two jaws (25a, 25b) of the first vice includes the step of clamping two semicircular plates (41a, 41b) of the first vice (13) about the blade (2); each semicircular plate (41a, 41b) being provided with a gripping face (43a, 43b) and being movable with respect to a corresponding supporting body (40a, 40b) of the respective jaw (25a, 25b) to assure the maximum contact of the gripping face (43a, 43b) with the blade (2); the method further comprising
- the step of clamping two jaws (25a, 25b) of a second vice (14) about the blade (2) so that the corresponding gripping faces (43a, 43b) of the jaws (25a, 25b) are arranged in contact with the blade (2); the step of clamping the two jaws (25a, 25b) of the second vice includes the step of clamping two semicircular plates (41a, 41b) of the second vice (14) about the blade (2); each semicircular plate (41a, 41b) being provided with a gripping face (43a, 43b) and being movable with respect to a corresponding supporting body (40a, 40b) of the respective jaw (25a, 25b) to assure the maximum contact of the gripping face (43a, 43b) with the blade (2); and
- the step of arranging the blade (2) with the axis (A) along a predetermined direction by means of a centering device (15).

14. A method according to claim 13, wherein the step of clamping the semicircular plates (41a, 41b) includes clamping two semicircular plates (41a, 41b) about the main body (23) of the blade (2).

15. A method according to claim 14, wherein the step of clamping two semicircular plates (41a, 41b) includes the step of adjusting the position of each semicircular plate (41a, 41b) so that the gripping face (43a, 43b) of each semicircular plate (41a, 41b) is essentially arranged in abutment against the main body (3) of the blade (2) .

16. A method according to claim 15, wherein the step of adjusting the position of each semicircular plate includes the step of rotating each semicircular plate (41a, 41b); each semicircular plate (41a, 41b) being rotational about an axis (C1, C2) with respect to the supporting body (40a, 40b).

17. A method according to anyone of the claims from 13 to 16, wherein the step of arranging the blade with the axis (A) along a predetermined direction includes arranging a first and a second fastening bodies (54, 56) of the centering device (15) in abutment against the tip (6) of the blade (2) and the anchoring base (5) of the blade (2) .

18. A method according to any one of the claims from 13 to 17, including the step of arranging stop elements (51) in abutment against the main body (3) of the blade (2) for blocking the blade (2).

## Patentansprüche

1. Turbinenblatthalteeinrichtung (2); wobei sich das Blatt (2) entlang einer ersten Längsachse (A) erstreckt und einen Grundkörper (3) aufweist, eine Verankerungsbasis (5) und eine Spitze (6) gegenüber von der Verankerungsbasis (5); wobei sich die Einrichtung (1) entlang einer zweiten Längsachse (B) erstreckt und einen Rahmen (12) aufweist; wenigstens eine erste Schraubklemme (13), welche zwei Schraubklemmenbacken (25a, 25b) aufweist, die eingerichtet sind, um den Grundkörper (3) des Blattes (2) geklemmt zu werden, wobei jede von diesen mit einer Klemmfläche (43a, 43b) ausgestattet ist und einen Lagerkörper (40a, 40b) und eine halbrunde Platte (41 a, 41 b) aufweist; wobei die halbrunde Platte (41 a, 41 b) mit der Klemmfläche (43a, 43b) ausgestattet ist und beweglich bezüglich des Lagerkörpers (40a, 40b) gelagert ist, um den maximalen Kontakt der Klemmfläche (43a, 43b) mit der Platte (2) sicherzustellen;
wobei die Einrichtung (1) **dadurch gekennzeichnet ist, dass** sie aufweist:
- eine zweite Schraubklemme (14), die zwei Schraubklemmenbacken (25a, 25b) aufweist, die eingerichtet sind, um den Grundkörper (3) des Blattes (2) geklemmt zu werden, wobei jede von diesen mit einer Klemmfläche (43a, 43b) ausgestattet ist; wobei jede Schraubklemmenbacke (25a, 25b) einen Lagerkörper (40a, 40b) und eine halbrunde Platte (41a, 41b) aufweist; wobei die halbrunde Platte (41a, 41b) mit der Klemmfläche (43a, 43b) ausgestattet ist und beweglich bezüglich des Lagerkörpers (40a, 40b) gelagert ist, um einen maximalen Kontakt der Klemmfläche (43a, 43b) mit dem Blatt (2) sicherzustellen; und
- eine Zentriereinrichtung (15), die durch den Rahmen (12) gelagert ist, wobei die Zentriereinrichtung (15) einen ersten Befestigungskörper (54) aufweist, der eingerichtet ist, in Angrenzung gegen die Spitze (6) des Blattes (2) angeordnet zu werden und einen zweiten Befestigungskörper (56), der eingerichtet ist, in Angrenzung gegen die Verankerungsbasis (5) des Blattes (2) angeordnet zu werden.

2. Einrichtung nach Anspruch 1, wobei sich jede halbrunde Platte (41 a, 41 b) um eine entsprechende Achse (C1; C2) erstreckt und drehbar um diese Achse (C1; C2) bezüglich des Lagerkörpers gelagert ist.

3. Einrichtung nach einem der vorhergehenden Ansprüche, wobei wenigstens eine Schraubklemmenbacke (25a, 25b) der ersten Schraubklemme (13) bezüglich des Rahmens (12) drehgelagert ist.

4. Einrichtung nach einem der vorhergehenden Ansprüche, wobei wenigstens eine Schraubklemmenbacke (25a, 25b) der zweiten Schraubklemme (14) bezüglich des Rahmens (12) drehgelagert ist.

5. Einrichtung nach einem der vorhergehenden Ansprüche, wobei der Rahmen (12) wenigstens eine Befestigungsplatte (16) aufweist.

6. Einrichtung nach Anspruch 5, wobei der Rahmen (12) wenigstens eine erste Wand (14) aufweist, welche sich von der Befestigungsplatte (16) im Wesentlichen schräg zu der Befestigungsplatte (16) erstreckt und mit welcher die erste Schraubklemme (13) gekoppelt ist.

7. Einrichtung nach Anspruch 5 oder 6, wobei der Rahmen (12) wenigstens eine zweite Wand (18) aufweist, welche sich von der Befestigungsplatte (16) im Wesentlichen schräg zur Befestigungsplatte (16) erstreckt und mit welcher die zweite Schraubklemme (14) gekoppelt ist.

8. Einrichtung nach einem der vorhergehenden Ansprüche, **dadurch gekennzeichnet, dass** die Zentriereinrichtung (15) an der ersten Wand (17) befestigt ist.

9. Einrichtung nach einem der Ansprüche 1 bis 7, wobei die Zentriereinrichtung (15) an der ersten und der zweiten Wand (17, 18) befestigt ist.

10. Einrichtung nach einem der vorhergehenden Ansprüche, wobei die Position des ersten Befestigungskörpers (54) in einer Richtung parallel zur zweiten Längsachse (B) einstellbar ist.

11. Einrichtung nach einem der vorhergehenden Ansprüche, wobei die Position des zweiten Befestigungskörpers (56) in einer Richtung parallel zu der zweiten Längsachse (B) einstellbar ist.

12. Einrichtung nach einem der vorhergehenden Ansprüche, **dadurch gekennzeichnet, dass** sie Stoppelemente (51) aufweist, die eingerichtet sind, in Angrenzung gegen den Grundkörper (3) des Blattes (2) zum Halten des Blattes (2) angeordnet zu werden.

13. Verfahren zum Halten eines Turbinenblattes (2), wobei das Blatt (2) sich entlang einer Längsachse (A) erstreckt und einen Grundkörper (3) aufweist, eine Verankerungsbasis (5) und eine Spitze (6) gegenüber der Verankerungsbasis (5); wobei das Verfahren die Schritte aufweist: Klemmen von zwei Schraubklemmenbacken (25a, 25b) einer ersten Schraubklemme (13) um das Blatt (2), so dass die entsprechenden Klemmflächen (43a, 43b) der Schraubklemmenbacken (25a, 25b) in Kontakt mit dem Blatt (2) angeordnet sind; wobei das Verfahren **dadurch gekennzeichnet ist, dass** der Schritt des Klemmens der zwei Schraubklemmenbacken (25a, 25b) der ersten Schraubklemme den Schritt des Klemmens von zwei halbrunden Platten (41a, 41b) der ersten Schraubklemme (13) um das Blatt (2) aufweist; wobei jede halbrunde Platte (41a, 41b) mit einer Klemmfläche (43a, 43b) ausgestattet ist und bezüglich eines entsprechenden Lagerkörpers (40a, 40b) der entsprechenden Schraubklemmenbacke (25a, 25b) beweglich ist, um den maximalen Kontakt der Klemmfläche (43a, 43b) mit dem Blatt (2) sicherzustellen; wobei das Verfahren weiter umfasst:
- den Schritt des Klemmens von zwei Schraubklemmenbacken (25a, 25b) einer zweiten Schraubklemme (14) um das Blatt (2), so dass die entsprechenden Klemmflächen (43a, 43b) der Schraubklemmenbacken (25a, 25b) in Kontakt mit dem Blatt (2) angeordnet sind, wobei der Schritt des Klemmens der zwei Schraubklemmenbacken (25a, 25b) der zweiten Schraubklemme den Schritt des Klemmens von zwei halbrunden Platten (41a, 41b) der zweiten Schraubklemme (14) um das Blatt (2) aufweist, wobei jede halbrunde Platte (41a, 41b) mit einer Klemmfläche (43a, 43b) ausgestattet ist und beweglich bezüglich eines entsprechenden Lagerkörpers (40a, 40b) der entsprechenden Schraubklemmenbacke (25a, 25b) ist, um den maximalen Kontakt mit der Klemmfläche (43a, 43b) mit dem Blatt (2) sicherzustellen; und
- der Schritt des Anordnens des Blattes (2) mit der Achse (A) entlang einer vorgegebenen Richtung durch eine Zentriereinrichtung (15).

14. Verfahren nach Anspruch 13, wobei der Schritt des Klemmens der halbrunden Platten (41 a, 41 b) das Klemmen von zwei halbrunden Platten (41 a, 41 b) um den Grundkörper (23) des Blattes (2) aufweist.

15. Verfahren nach Anspruch 14, bei welchem der Schritt des Klemmens von zwei halbrunden Platten (41 a, 41 b) den Schritt des Einstellens der Position von jeder halbrunden Platte (41a, 41b) aufweist, so dass die Klemmfläche (43a, 43b) von jeder halbrunden Platte (41, 41b) im Wesentlichen in Angrenzung gegen den Grundkörper (3) des Blattes (2) angeordnet ist.

16. Verfahren nach Anspruch 15, wobei der Schritt des Einstellens der Position von jeder halbrunden Platte den Schritt des Rotierens jeder halbrunden Platte (41a, 41b) aufweist; wobei jede halbrunde Platte (41a, 41b) um eine Achse (C1, C2) bezüglich des Lagerkörpers (40a, 40b) drehbar ist.

17. Verfahren nach einem der vorhergehenden Ansprüche 13 bis 16, wobei der Schritt des Anordnens des Blattes mit der Achse (A) entlang einer vorgegebenen Richtung das Anordnen eines ersten und eines zweiten Befestigungskörpers (54, 56) der Zentriereinrichtung (15) in Angrenzung gegen die Spitze (6) des Blattes (2) und der Verankerungsbasis (5) des Blattes (2) aufweist.

18. Verfahren nach einem der Ansprüche 13 bis 17, den Schritt des Anordnens von Stoppelementen (51) in Angrenzung gegen den Grundkörper (3) des Blattes (2) zum Halten des Blattes (2) aufweisend.

## Revendications

1. Dispositif de blocage d'une aube de turbine (2) ; l'aube (2) s'étendant le long d'un premier axe longitudinal (A) et comprenant un corps principal (3), une base d'ancrage (5) et une pointe (6) opposée à la base d'ancrage (5) ; le dispositif (1) s'étendant le long d'un deuxième axe longitudinal (B) et comprenant un châssis (12) ; au moins un premier étau (13) qui comprend deux mâchoires (25a, 25b) adaptées pour être serrées autour du corps principal (3) de l'aube (2), dont chacune est prévue avec une face de préhension (43a, 43b) et comprend un corps de support (40a, 40b) et une plaque semi-circulaire (41a, 41b) ; la plaque semi-circulaire (41a, 41b) étant prévue avec la face de préhension (43a, 43b) et étant supportée de manière mobile par rapport au corps de support (40a, 40b) pour garantir le contact maximum de la face de préhension (43a, 43b) avec l'aube (2) ;
le dispositif (1) étant **caractérisé en ce qu'**il comprend :
un deuxième étau (14) qui comprend deux mâchoires (25a, 25b), adaptées pour être serrées autour du corps principal (3) de l'aube (2), dont chacune est prévue avec une face de préhension (43a, 43b) ; chaque mâchoire (25a, 25b) comprenant un corps de support (40a, 40b) et une plaque semi-circulaire (41a, 41b) ; la plaque semi-circulaire (41a, 41b) étant prévue avec la face de préhension (43a, 43b) et étant supportée de manière mobile par rapport au corps de support (40a, 40b) pour garantir le contact maximum de la face de préhension (43a, 43b) avec l'aube (2) ; et
un dispositif de centrage (15) supporté par le châssis (12) ; le dispositif de centrage (15) comprenant un premier corps de fixation (54) adapté pour être agencé en butée contre la pointe (6) de l'aube (2) et un deuxième corps de fixation (56) adapté pour être agencé en butée contre la base d'ancrage (5) de l'aube (2).

2. Dispositif selon la revendication 1, dans lequel chaque plaque semi-circulaire (41a, 41b) s'étend autour d'un axe correspondant (C1 ; C2) et est supportée de manière rotative autour dudit axe (C1 ; C2) par rapport au corps de support.

3. Dispositif selon l'une quelconque des revendications précédentes, dans lequel au moins une mâchoire (25a, 25b) du premier étau (13) est supportée de manière rotative par rapport au châssis (12).

4. Dispositif selon l'une quelconque des revendications précédentes, dans lequel au moins une mâchoire (25a, 25b) du deuxième étau (14) est supportée de manière rotative par rapport au châssis (12).

5. Dispositif selon l'une quelconque des revendications précédentes, dans lequel le châssis (12) comprend une plaque de fixation (16).

6. Dispositif selon la revendication 5, dans lequel le châssis (12) comprend au moins une première paroi (17) qui s'étend à partir de la plaque de fixation (16) de manière essentiellement transversale par rapport à la plaque de fixation (16) et à laquelle le premier étau (13) est couplé.

7. Dispositif selon la revendication 5 ou 6, dans lequel le châssis (12) comprend au moins une deuxième paroi (18) qui s'étend à partir de la plaque de fixation (16) de manière essentiellement transversale par rapport à la plaque de fixation (16) et à laquelle le deuxième étau (14) est couplé.

8. Dispositif selon l'une quelconque des revendications précédentes, **caractérisé en ce que** le dispositif de centrage (15) est fixé sur la première paroi (17).

9. Dispositif selon l'une quelconque des revendications 1 à 7, dans lequel le dispositif de centrage (15) est fixé sur la première et sur la deuxième paroi (17, 18).

10. Dispositif selon l'une quelconque des revendications précédentes, dans lequel la position du premier corps de fixation (54) est ajustable dans une direction parallèle au deuxième axe longitudinal (B).

11. Dispositif selon l'une quelconque des revendications précédentes, dans lequel la position du deuxième corps de fixation (56) est ajustable dans une direction parallèle au deuxième axe longitudinal (B).

12. Dispositif selon l'une quelconque des revendications précédentes, **caractérisé en ce qu'**il comprend des éléments de butée (51) adaptés pour être agencés en butée contre le corps principal (3) de l'aube (2) pour bloquer l'aube (2).

13. Procédé pour bloquer une aube de turbine (2) ; l'aube (2) s'étendant le long d'un axe longitudinal (A) et comprenant un corps principal (3), une base d'ancrage (5) et une pointe (6) opposée à la base d'ancrage (5) ; le procédé comprenant les étapes consistant à serrer les deux mâchoires (25a, 25b) d'un premier étau (13) autour de l'aube (2) de sorte que les faces de préhension (43a, 43b) correspondantes des mâchoires (25a, 25b) sont agencées en contact avec l'aube (2) ; le procédé étant **caractérisé en ce que** l'étape consistant à serrer les deux mâchoires (25a, 25b) du premier étau comprend l'étape consistant à serrer deux plaques semi-circulaires (41a, 41b) du premier étau (13) autour de l'aube (2) ; chaque plaque semi-circulaire (41a, 41b) étant prévue avec une face de préhension (43a, 43b) et étant mobile par rapport à un corps de support (40a, 40b) correspondant de la mâchoire (25a, 25b) respective afin de garantir le contact maximum de la face de préhension (43a, 43b) avec l'aube (2), le procédé comprenant en outré :
l'étape consistant à serrer deux mâchoires (25a, 25b) d'un deuxième étau (14) autour de l'aube (2) de sorte que les faces de préhension (43a, 43b) correspondantes des mâchoires (25a, 25b) sont agencées en contact avec l'aube (2) ; l'étape consistant à serrer les deux mâchoires (25a, 25b) du deuxième étau comprend l'étape consistant à serrer deux plaques semi-circulaires (41a, 41b) du deuxième étau (14) autour de l'aube (2) ; chaque plaque semi-circulaire (41a, 41b) étant prévue avec une face de préhension (43a, 43b) et étant mobile par rapport à un corps de support (40a, 40b) correspondant de la mâchoire (25a, 25b) respective afin de garantir le contact maximum de la face de préhension (43a, 43b) avec l'aube (2) ; et
l'étape consistant à agencer l'aube (2) avec l'axe (A) le long d'une direction prédéterminée au moyen d'un dispositif de centrage (15).

14. Procédé selon la revendication 13, dans lequel l'étape consistant à serrer les plaques semi-circulaires (41a, 41b) comprend l'étape consistant à serrer deux plaques semi-circulaires (41a, 41b) autour du corps principal (23) de l'aube (2).

15. Procédé selon la revendication 14, dans lequel l'étape consistant à serrer deux plaques semi-circulaires (41a, 41b) comprend l'étape consistant à ajuster la position de chaque plaque semi-circulaire (41a, 41b) de sorte que la face de préhension (43a, 43b) de chaque plaque semi-circulaire (41a, 41b) est essentiellement agencée en butée contre le corps principal (3) de l'aube (2).

16. Procédé selon la revendication 15, dans lequel l'étape consistant à ajuster la position de chaque plaque semi-circulaire comprend l'étape consistant à faire tourner chaque plaque semi-circulaire (41a, 41b) ; chaque plaque semi-circulaire (41a, 41b) pouvant tourner autour d'un axe (C1, C2) par rapport au corps de support (40a, 40b).

17. Procédé selon l'une quelconque des revendications 13 à 16, dans lequel l'étape consistant à agencer l'aube avec l'axe (A) le long d'une direction prédéterminée comprend l'étape consistant à agencer un premier et un deuxième corps de serrage (54, 56) du dispositif de centrage (15) en butée contre la pointe (6) de l'aube (2) et la base d'ancrage (5) de l'aube (2).

18. Procédé selon l'une quelconque des revendications 13 à 17, comprenant l'étape consistant à agencer des éléments de butée (51) en butée contre le corps principal (3) de l'aube (2) pour bloquer l'aube (2).
